## Europäisches Patentamt
## European Patent Office
## Office européen des brevets

(19)

(11) Veröffentlichungsnummer: **0 018 639**

**A1**

(12)

# EUROPÄISCHE PATENTANMELDUNG

(21) Anmeldenummer: **80102358.1**

(22) Anmeldetag: **30.04.80**

(51) Int. Cl.³: **G 06 F 3/153**
**H 04 N 7/18, G 03 B 27/32**

(30) Priorität: **08.05.79 DE 2918516**

(43) Veröffentlichungstag der Anmeldung:
**12.11.80 Patentblatt 80/23**

(84) Benannte Vertragsstaaten:
**AT BE CH FR GB IT LI LU NL SE**

(71) Anmelder: **Stiftung Deutsches
Krebsforschungszentrum
Im Neuenheimer Feld 280
D-6900 Heidelberg 1(DE)**

(72) Erfinder: **Kubesch, Rudolf
Birkenstrasse 3
D-6921 Lobbach 2(DE)**

(72) Erfinder: **Kohler, Hermann
Seestrasse 38
D-6901 Eppelheim(DE)**

(72) Erfinder: **Hamleh, Hermann
Rindweg 7
D-6905 Schriesheim(DE)**

(74) Vertreter: **Deufel, Paul et al,
Patentanwälte MÜLLER-BORé-DEUFEL SCHÖN-HERTEL
Siebertstrasse 4
D-8000 München 86(DE)**

(54) **Abbildungsvorrichtung.**

(57) Bildinformationen sind in digitaler Form in einem Speicher- und Verarbeitungssystem 1 - 8 vorhanden und von diesem System werden analog Signale an einen elektronisch steuerbaren Bildprojektor abgegeben, der ein entsprechendes Bild auf einem fotosensitiven Schirm 10 wirft.

Croydon Printing Company Ltd.

- 1 -

## Abbildungsvorrichtung

Die Erfindung betrifft eine Abbildungsvorrichtung für die Anfertigung von dauerhaften Abbildungen ausgehend von einer elektronisch aufbereiteten Bildinformation. Insbesondere befaßt sich die Erfindung mit derartigen Abbildungsvorrichtungen, die dazu bestimmt sind, in einem elektronischen Bildverarbeitungssystem verfügbare Bildinformationen, die auf einem Monitor angezeigt werden können, dauerhaft festzuhalten, damit sie für Dokumentations- oder Archivzwecke erhalten bleiben. Ein besonderes Anwendungsgebiet sind elektronische Bildverarbeitungssysteme für die graphische Darstellung und Speicherung von medizinischen Daten und Informationen.

Die graphische Darstellung von medizinischen Daten und Informationen auf Schwarz-Weiß-Monitoren oder RGB (Rot-Grün-Blau)-Monitoren wurde bereits vor einigen Jahren in die Nuklearmedizin eingeführt und erleichtert dort z.B. die Diagnose von Krebserkrankungen. Anhand dieser graphischen Darstellungen können unterschiedliche Gewebestrukturen und Funktionsabläufe in Organen erkannt werden, so daß eine genauere Diagnose von Erkrankungen ermöglicht wird. Farb-Raster-Sichtgeräte zur graphischen, farblichen Darstellung von in einer Datenverarbeitungsanlage gespeicherten oder von einer solchen erzeugten Daten sind ebenfalls bereits bekannt. Solche Geräte dienen zur Sichtbarmachung von gespeicherten oder aktuellen Bildinformationen. Dabei ist es auch vorgesehen, aktuelle Bildinformationen zu speichern und mittels eines Bildwiederholspeichers für spätere Verwendung verfügbar zu machen.

In vielen Fällen ist jedoch neben einer Monitor-Sichtanzeige eine dauerhafte Fixierung von Bildinformationen
für Archivierungs-Dokumentations- und Forschungszwecke
erforderlich. Bisher werden daher an die elektronischen
Bildverarbeitungssysteme sog. Dreifarben-Tintenspritzer
angeschlossen, die von elektronischen Bildsignalen angesteuert werden und dauerhafte Bilder durch Aufspritzen
von verschieden-farbiger Tinte auf einen gemeinsamen Träger erzeugen, wobei die verschiedenen Farben drei Primärfarben sind. Derartige Dreifarben-Tintenspritzer sind sehr
teuer. Darüber hinaus können sie nicht die hohen Anforderungen an die geforderte Qualität der Abbildungen erfüllen.
Ein schwerwiegender Mangel dieser Geräte ist die unvollkommene Farbmischung auf dem Bildträger, wobei ferner Farbverfälschungen auftreten und Farbtöne unzureichender Brillianz beobachtet werden. Darüber hinaus beschränkt sich die
Farbdarstellung auf eine vom Hersteller vorgegebene Farbskala.

Aufgabe der Erfindung ist es, eine Abbildungsvorrichtung
zu schaffen, die trotz niedrigerer Kosten eine wesentlich
bessere Bildqualität liefert.

Diese Aufgabe wird durch eine Abbildungsvorrichtung der
eingangs genannten Art gelöst, die gemäß der Erfindung gekennzeichnet ist durch die Kombination eines von der elektronischen Bildinformation angesteuerten Bildprojektors mit
der Halterungsvorrichtung eines Kopier- bzw. Vergrößerungsgeräts zur Anfertigung von Bildern auf einem photoempfindlichen Trägermaterial, das von der Halterungsvorrichtung
in der Projektionsebene des Bildprojektors gehalten wird.

Gemäß einem besonderen Merkmal der Erfindung wird als Bild-

- 3 -

projektor ein handelsüblicher Fernseh-Bildprojektor verwendet.

Gemäß einem weiteren besonderen Merkmal der Erfindung wird
als photoempfindliches Trägermaterial Photopapier verwendet, insbesondere Positiv-Farbphotopapier, und die Halterungsvorrichtung entspricht im wesentlichen derjenigen
bei einem herkömmlichen Farbkopier- bzw. Vergrößerungsgerät. Diese Halterungsvorrichtung kann als Kassette zur
Aufnahme und für den Transport des lichtempfindlichen
Photopapiers ausgebildet sein, wobei diese Kassette die
Handhabung in einer an sich bekannten, der Abbildungsvorrichtung zugeordneten Photopapier-Entwicklungsanlage erleichtert.

Gemäß einer vorteilhaften Weiterbildung der Erfindung ist
der Bildprojektor an ein elektronisches Bildverarbeitungssystem angeschlossen, und zwischen dem elektronischen
Bildverarbeitungssystem und dem Bildprojektor ist eine Ansteuerschaltung vorgesehen, welche die von dem Bildverarbeitungssystem in Form von Digitalsignalen gelieferten
Bildinformationen in für die Ansteuerung des Bildprojektors
geeignete Analogsignale umsetzt. Das elektronische Bildverarbeitungssystem enthält vorzugsweise Korrekturmittel,
welche die dem Bildprojektor zugeführten Farbsignale
mit den charakteristischen Filterfaktoren des verwendeten
photoempfindlichen Trägermaterials, insbesondere Farb-
Positivpapiers, korrigieren.

In weiterer vorteilhafter Ausgestaltung der Erfindung enthält das elektronische Bildverarbeitungssystem einen mit
einer Datensignal-Sammelleitung verbundenen elektronischen
Rechner, insbesondere Mikrocomputer, und zwischen der Datensignal-Sammelleitung und einer Bildsignal-Sammelleitung angeordnete Speicheranordnungen, wobei die Ansteuerschaltung an die Bildsignal-Sammelleitung angeschlossen ist.

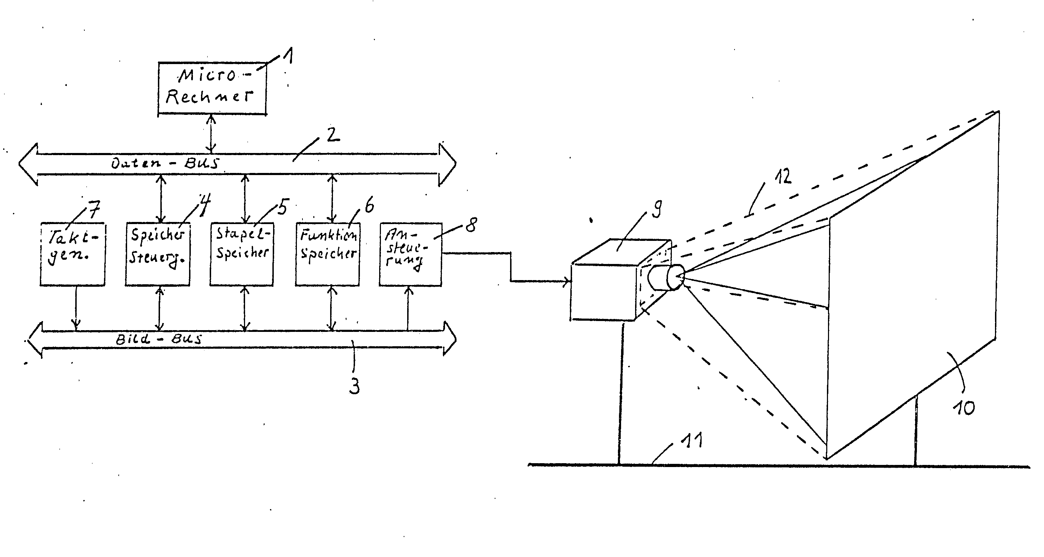

Weitere Merkmale und Vorteile der Erfindung ergeben sich aus der Beschreibung eines Ausführungsbeispiels anhand der Zeichnung. Die Zeichnung zeigt eine schematische Darstellung der Abbildungsvorrichtung, die aus einem als Blockschaltbild dargestellten elektronischen Datenverarbeitungssystem und einer Projektionsanordnung besteht.

Das in der Zeichnung in Form eines Blockschaltbilds gezeigte elektronische Datenverarbeitungssystem enthält bei der hier beschriebenen Ausführungsform als wesentlichen Bestandteil einen Mikro-Rechner bzw. Mikrocomputer 1, der über eine Datensignal-Sammelleitung (Daten-BUS) 2 mit verschiedenen Speicherschaltungen in Verbindung steht. Diese Speicherschaltungen sind zwischen der Datensignal-Sammelleitung 2 und einer Bildsignal-Sammelleitung (Bild-BUS) 3 angeordnet. Diese Speicherschaltungen umfassen eine Speichersteuerung 4 mit einem Adressregister, das seinen Inhalt nach jedem Lese- bzw. Schreibvorgang automatisch um 1 erhöht, so daß ein sequentielles Übertragen von Daten ohne erneute Adressübergabe erfolgen kann. Ferner ist ein Stapelspeicher 5 vorgesehen, der als Bildwiederholspeicher dient. Die im Stapel- bzw. Bildwiederholspeicher stehende Bildinformation wird zur Aufrechterhaltung des von einem Monitor (nicht gezeigt) darzustellenden Schirmbildes 50-mal/s ausgelesen und über die Bildsignal-Sammelleitung 3 über eine Monitor-Ansteuerschaltung an den Monitor weitergegeben. Durch Zusammenschalten mehrerer Stapelspeicher geeigneter Kapazität kann jede gewünschte Bildwiederholspeicherkapazität bzw. Bildmatrixgröße hergestellt werden.

Ferner ist ein Funktionsspeicher 6 vorgesehen, der die Aufgabe erfüllt, die Darstellung von Farbbildern auf dem Monitor zu ermöglichen, wenn der Bildwiederholspeicher bzw. Stapelspeicher 5 nur eine Worttiefe aufweist, die nur für Schwarz-Weiß-Darstellungen geeignet ist, z.B. eine Worttiefe von 8 Bit. Der Funktionsspeicher speichert vom Mikrocomputer 1 gelieferte Farbtabellen zur Umsetzung der Grauwerte in Farbwerte oder sonstige Funktionen für die Bildbearbeitung. Ein 8 Bit-breites Grauwert-Eingangssignal wird z.B. in ein Ausgangssignal von 3 x 5 Bit umgesetzt, jeweils 5 Bit für eine der Primärfarben Rot, Grün, Blau. Die Kapazität des Speichers kann z.B. 256 x 15 Bit betragen.

Ein an die Bildsignal-Sammelleitung 3 angeschlossener Taktgenerator 7 liefert Bild- und Zeilensynchronisationssignale bzw. Horizontal- und Vertikal-Synchronisationssignale, legt die Position der Bildmatrix innerhalb eines Fernsehrasters fest und steuert die Übertragung der Bilddaten zu einem Monitor bzw. zu der nachstehend beschriebenen Projektionsanordnung.

Die in der rechten Hälfte der Zeichnung schematisch gezeigte Projektionsanordnung ist an die Bildsignal-Sammelleitung 3 über eine Ansteuerschaltung 8 angeschlossen. Die Ansteuerschaltung 8 erzeugt aus den digitalen Bildsignalen, die von der Bildsignal-Sammelleitung 3 geliefert werden, geeignete Analogsignale für die Ansteuerung eines handelsüblichen Farbfernsehprojektors 9. Die Projektionsanordnung enthält ferner eine Halterungsvorrichtung 10 zur Halterung eines photoempfindlichen Trägermaterials in der Projektionsebene des Bildprojektors 9. Als photoempfindliches Trägermaterial ist insbesondere handelsübliches Positiv-Farbphotopapier vorgesehen. Der Bildprojektor 9 und die Halterungsvorrichtung 10 sind verschiebbar auf einer gemeinsamen Schiene 11 angeordnet. Durch eine Relativverschiebung zwischen dem Bildprojektor 9 und der Halterungsvorrichtung 10 auf der Schiene 11 kann der Abstand dazwischen und somit die Größe des projizierten Bildes variiert werden. Zur Erzielung einer optimalen Bildqualität ist eine optische Abschirmung vorgesehen, die als Faltenbalg 12 oder als ein die gesamte Projektionsanordnung umgebendes Gehäu-

- 6 -

se ausgebildet ist.

Zur Vereinfachung der Handhabung des photoempfindlichen Trägermaterials bzw. Photopapiers ist eine Kassette vorgesehen, wie sie für die Aufnahme und den Transport des photoempfindlichen Materials bei üblichen Kopier- bzw. Vergrößerungsgeräten verwendet wird. Ferner ist der Halterungsvorrichtung 10 eine handelsübliche Photopapier-Entwicklungsanlage nachgeschaltet.

Anders als bei herkömmlichen Farbkopier- bzw. Vergrößerungsgeräten ist es bei der erfindungsgemäßen Abbildungsvorrichtung nicht erforderlich, Farbfilter zur Korrektur der Photopapiercharakteristik im Strahlengang vorzusehen. Vielmehr enthält das elektronische Bildverarbeitungssystem Korrekturmittel, welche die dem Bildprojektor zugeführten Farbsignale mit den charakteristischen Filterfaktoren des jeweils verwendeten photoempfindlichen Trägermaterials korrigieren. Bei der gezeigten Ausführungsform erfüllt der Mikrocomputer 1 diese Aufgabe. Dieser Mikrocomputer 1 errechnet und steuert ferner die korrekte Belichtungszeit.

- 1 -

Patentansprüche

1. Abbildungsvorrichtung für die Anfertigung von dauerhaften Abbildungen ausgehend von einer elektronisch aufbereiteten Bildinformation, gekennzeichnet durch die Kombination eines von der elektronischen Bildinformation angesteuerten Bildprojektors (9) mit der Halterungsvorrichtung (10) eines Kopier- bzw. Vergrößerungsgeräts zur Anfertigung von Bildern auf einem photoempfindlichen Trägermaterial, das von der Halterungsvorrichtung (10) in der Projektionsebene des Bildprojektors (9) gehalten wird.

2. Abbildungsvorrichtung nach Anspruch 1, dadurch gekennzeichnet, daß der Bildprojektor (9) ein an sich bekannter Fernseh-Bildprojektor ist.

3. Abbildungsvorrichtung nach Anspruch 1 oder 2, dadurch gekennzeichnet, daß das photoempfindliche Trägermaterial Photopapier ist.

4. Abbildungsvorrichtung nach einem der Ansprüche 1 bis 3, dadurch gekennzeichnet, daß der Bildprojektor und das photoempfindliche Trägermaterial für Farbbilder ausgelegt sind.

5. Abbildungsvorrichtung nach einem der vorstehenden Ansprüche, dadurch gekennzeichnet, daß die Entfernung zwischen dem Bildprojektor (9) und der Halterungsvorrichtung (10) einstellbar ist.

6. Abbildungsvorrichtung nach einem der vorstehenden Ansprüche, dadurch gekennzeichnet, daß das photoempfindliche Trägermaterial durch einen Schirm (12) gegen Fremdlicht geschützt ist.

7. Abbildungsvorrichtung nach Anspruch 6, dadurch gekennzeichnet, daß der Schirm (12) ein den Strahlengang der Projektion vom Bildprojektor (9) bis zu der Halterungsvorrichtung (10) umgebender lichtundurchlässiger Faltenbalg ist.

8. Abbildungsvorrichtung nach Anspruch 6, dadurch gekennzeichnet, daß der Schirm ein den Bildprojektor (9) und die Halterungsvorrichtung (10) umgebendes lichtundurchlässiges Gehäuse ist.

9. Abbildungsvorrichtung nach einem der vorstehenden Ansprüche, dadurch gekennzeichnet, daß die Halterungsvorrichtung (10) eine Kassette zur Aufnahme und für den Transport des lichtempfindlichen Trägermaterials enthält.

10. Abbildungsvorrichtung nach einem der vorstehenden Ansprüche, gekennzeichnet durch eine der Halterungsvorrichtung (10) nachgeschaltete, an sich bekannte Photopapier-Entwicklungsanlage.

11. Abbildungsvorrichtung nach einem der vorstehenden Ansprüche, dadurch gekennzeichnet, daß der Bildprojektor (9) an ein elektronisches Bildverarbeitungssystem angeschlossen ist.

12. Abbildungsvorrichtung nach Anspruch 11, dadurch gekennzeichnet, daß zwischen dem elektronischen Bildverarbeitungssystem und dem Bildprojektor (9) eine Ansteuerschaltung (8) vorgesehen ist, die die von dem Bildverarbeitungssystem in Form von Digitalsignalen gelieferten Bildinformationen in für die Ansteuerung des Bildprojektors (9) geeignete Analogsignale umsetzt.

13. Abbildungsvorrichtung nach Anspruch 12, dadurch gekennzeichnet, daß die Ansteuerschaltung (8) ferner die für den Betrieb eines an sich bekannten Fernseh-Bildprojektors (9) erforderlichen Horizontal- und Vertikal-Synchronisationssignale erzeugt.

14. Abbildungsvorrichtung nach einem der Ansprüche 11 bis 13, dadurch gekennzeichnet, daß das elektronische Bildverarbeitungssystem Korrekturmittel (1) enthält, die die dem Bildprojektor (9) zugeführten Farbsignale mit den charakteristischen Filterfaktoren des verwendeten photoempfindlichen Trägermaterials korrigieren.

15. Abbildungsvorrichtung nach einem der Ansprüche 12 bis 14, dadurch gekennzeichnet, daß das elektronische Bildverarbeitungssystem einen mit einer Datensignal-Sammelleitung (2) verbundenen elektronischen Rechner (1) und zwischen der Datensignal-Sammelleitung (2) und einer Bildsignal-Sammelleitung (3) angeordnete Speicheranordnungen (4, 5, 6) enthält und daß die Ansteuerschaltung (8) an die Bildsignal-Sammelleitung (3) angeschlossen ist.

Micro-Rechner 1

Daten - BUS 2

Takt-gen. 7

Speicher-Steuerg. 4

Stapel-Speicher 5

Funktion Speicher 6

An-steue-rung 8

Bild - BUS 3

9

12

11

10

0018639

| Europäisches Patentamt | EUROPÄISCHER RECHERCHENBERICHT | Nummer der Anmeldung EP 80102358.1 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | DE - A1 - 2 807 788 (THOMSON) <br> + Seite 1, Anspruch 1; Seite 10, Zeilen 21-29; Seite 23, Zeile 14 bis Seite 25, Zeile 19; Fig. 1,2,7 + <br> -- | 12,13, 15 | G 06 F 3/153 <br> H 04 N 7/18 <br> G 03 B 27/32 |
| | DE - A1 - 2 740 009 (GENERAL ELECTRIC) <br> + Seite 1, Ansprüche 1,2; Seiten 3,4; Ansprüche 7,8; Seite 10, Zeilen 1-19; Fig. 1 + <br> -- | 12,13, 15 | |
| | | | RECHERCHIERTE SACHGEBIETE (Int. Cl. 3) |
| X | DE - A - 2 303 800 (VEB ROBOTRON) <br> + Gesamt + <br> -- | 1-3,5 | G 06 F 3/00 <br> G 06 L 15/00 <br> G 03 B 27/00 |
| X | DE - A - 2 007 191 (AGFA) <br> + Seite 1, Zeile 1 bis Seite 2, Zeile 2; Seite 2, Zeilen 9-16; Fig. + <br> -- | 1-3 | H 04 N 7/00 <br> H 04 N 5/00 <br> H 01 J 29/00 <br> H 01 J 31/00 |
| | US - A - 4 074 254 (IBM) <br> + Zusammenfassung; Fig. 1,2 + <br> -- | 15 | |
| P | ELEKTRONIK, 28. Jahrgang, Nr. 12, 13. Juni 1979, München <br> HÄUSING, HOLZHAUSEN, WOLF "Mikroprozessor steuert Bildverarbeitungsanlage", Seiten 73-78 <br> -- | 12-15 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze |
| X | DE - B1 - 2 364 047 (VIDEOPRINT) <br> + Patentansprüche, Seite 2, Spalte 4, Zeilen 46-55; Fig. 1,2 + <br> -- | 1-4,11, 13 | E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort WIEN | Abschlußdatum der Recherche 08-08-1980 | Prüfer KRAL |
|---|---|---|

EPA form 1503.1  06.78

Europäisches
Patentamt

**EUROPÄISCHER RECHERCHENBERICHT**

Nummer der Anmeldung

EP 80102358.1

| | EINSCHLÄGIGE DOKUMENTE | | KLASSIFIKATION DER ANMELDUNG (Int.Cl.) 3 |
|---|---|---|---|
| Kategorie | Kennzeichnung des Dokuments mit Angabe, soweit erforderlich, der maßgeblichen Teile | betrifft Anspruch | |
| X | <u>DE - A - 2 120 817</u> (COMPUTER OPTICS)<br><br>+ Fig. 2,6; Ansprüche 1-5; Seiten 1-3, 15,16 + | 1-3,8, 10,11- 13,15 | |
| | -- | | |
| | <u>FR - A - 907 208</u> (PHILIPS)<br><br>+ Fig. + | 1-7 | |
| | -- | | |
| X | <u>GB - A - 1 203 822</u> (ALPHANUMERIC INC)<br><br>+ Fig. 1-5; Seiten 2-5 + | 1,2, 11-13, 15 | RECHERCHIERTE SACHGEBIETE (Int. Cl.) 3 |
| | -- | | |
| | <u>US - A - 3 809 888</u> (TEKTRONIX)<br><br>+ Fig. 1; Seite 1, Spalte 2, Zeilen 46-68 + | 1,2,4, 6 | |
| | -- | | |
| | <u>US - A - 2 816 157</u> (ANDREAS)<br><br>+ Fig. 1; Seite 1, Spalte 1, Zeilen 40-42; Spalte 2, Zeilen 10-18, 26-32 + | 1,2,4, 6,8,9 | |
| | -- | | |
| | <u>US - A - 2 677 012</u> (BACH)<br><br>+ Fig. 1; Seite 1, Spalte 1, Zeilen 1-9; Seite 3, Spalte 5, Zeilen 43-47, 71-74 + | 5 | |
| | ---- | | |

EPA Form 1503.2  06.78